Europäisches Patentamt

European Patent Office

Office européen des brevets

(11) Publication number: **0 464 776 B1**

# EUROPEAN PATENT SPECIFICATION

(45) Date of publication of patent specification: **14.06.95**    (51) Int. Cl.⁶: **D06F 39/08**, D06F 33/02, G01F 23/00

(21) Application number: **91110954.4**

(22) Date of filing: **02.07.91**

(54) **Apparatus for measuring the water charge in a laundry washer.**

(30) Priority: **03.07.90 IT 4573990**

(43) Date of publication of application:
**08.01.92 Bulletin 92/02**

(45) Publication of the grant of the patent:
**14.06.95 Bulletin 95/24**

(84) Designated Contracting States:
**DE ES FR GB IT SE**

(56) References cited:
**EP-A- 0 110 999
EP-A- 0 202 509
EP-A- 0 219 387
EP-A- 0 222 264
DE-C- 3 027 399**

(73) Proprietor: **Zanussi Elettrodomestici S.p.A.
Via Giardini Cattaneo, 3,
C.P. 147
I-33170 Pordenone (IT)**

(72) Inventor: **Frucco, Giuseppe
Via Tiro a Segno 25
I-33170 Pordenone (IT)**

(74) Representative: **Patentanwälte Grünecker,
Kinkeldey, Stockmair & Partner
Maximilianstrasse 58
D-80538 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The invention relates to apparatus for measuring the water charge in a laundry washer, particularly a laundry washer of the type in which the laundering liquid is recirculated and sprayed onto the laundry contained in the drum of the machine, said apparatus being adapted to determine the amount of water admitted to the laundering tub, exclusively by volumetric measurements of the water input.

In known laundry washers, and in particular laundry washers with recirculation of the laundering liquid, the amount of water admitted to the laundering tub is controlled by using at least one pressure switch, generally of the type permitting the water charge to be adjusted to different levels for carrying out the laundering operation with a reduced and a standard amount of liquid, respectively, for laundering cotton fabrics or delicate synthetic fabrics, the water being admitted to the tub in repeated charging steps, and the laundering liquid recirculated from the bottom part to the top part of the tub by means of a conventional recirculation pump, to thereby permit the complete absorption of the laundering liquid by the laundry. (cf EP-A- 202 509)

It is an object of the present invention to simplify the construction of laundry washers of this type by eliminating the pressure switch for controlling the amount of water admitted to the tub, and performing this operation by means of a different criterium so as to always permit accurate control of the water level in the tub in accordance with the amount and type of laundry contained in the drum to thereby optimize the consumption of water, detergents and electric energy used for washing the specified laundry.

This and other objects are attained according to the invention by apparatus for the volumetric measurement the water charge admitted to the laundering tub of laundry washers, the apparatus according to the invention displaying the characteristics and advantages to be described.

The invention will be more clearly understood from the following description, given by way of example with reference to the accompanying drawings, wherein:

Fig. 1     is a diagrammatic illustration of a laundry washer of the laundering liquid recirculation type and provided with a measuring apparatus according to a first embodiment of the invention,

fig. 2     is a diagrammatic illustration of a laundry washer of the laundering liquid recirculation type and provided with a measuring apparatus according to a second embodiment of the invention, and

fig. 3     shows an electric circuit diagram of the measuring apparatus of the laundry washer of fig. 2.

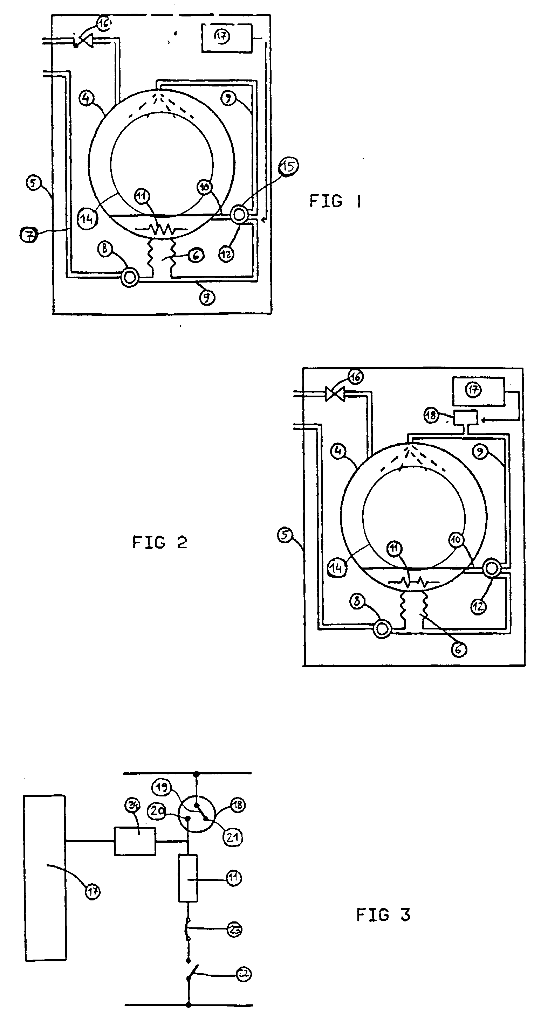

Shown in fig. 1 is a laundry washer provided with the water charge measuring apparatus according to the invention, and in particular a laundry washer substantially comprising a laundering tub 4 mounted in a per se known manner in an outer metallic casing 5 and having its lower part connected to a receptacle 6 for collecting the water admitted to the tub together with detergents, the collecting receptacle being connected on the one hand to the discharge conduit 7 of the machine through a discharge pump 8, and on the other hand to a recirculation conduit 9 terminating at the top end of the tub and provided with a branch conduit 10 connected to the tub at a location corresponding to the minimum water charge level of the tub during the laundering programs of the machine, this level being sufficient for completely covering an electric heater element 11 installed in the tub for heating the laundering liquid, a conventional circulation pump 12 being connected to said branch conduit and operable to recirculate the laundering liquid from collector receptacle 6 to the tub 4 through both conduits 9 and 10, the laundrering liquid to be sprayed onto the laundry 13 contained in a drum 14 rotatably mounted in tub 4, so as to progressively and completely soak the laundry during the execution of any laundering program.

Branch conduit 10 is advantageously connected to tub 4 at a location whereat the (not shown) filter of the machine is disposed, so that the turbulent movement created at this location during the recirculation of the laundering liquid through this conduit effectively promotes the dissolution of granular detergents introduced into the tub and tending to form deposits on the filter body, so that any obturation of the filter body by the detergents is effectively prevented.

The apparatus for measuring the amount of water to be admitted to tub 4 is substantially embodied in circulation pump 12, the electric motor 15 of which is operatively connected to a solenoid valve 16 controlling the admission of water to the tub, and to a conventional electronic control unit 17 operable to automatically energize and deenergize the various electric components of the machine for the execution of any selected laundering program, these control functions being advantageously incorporated in a microprocessor (not shown).

The operation of measuring the amount of water admitted to tub 4 is carried out by using electronic control unit 17, which is adapted to measure or count the interval from the time the admission of water to the tub is started, with simultaneous energization of circulation pump 12, at this instant under dry-running conditions, to the time instant at which the pump is primed by the water level in the tub reaching its pre-set minimum.

The thus measured time interval is used as a parameter for determining the flow through solenoid valve 16 in accordance with the formula

$$P = \frac{Q_i}{T}$$

wherein

$P$ = the flow through the solenoid valve,

$Q_i$ = amount of water (in litres) corresponding to the level required for priming circulation pump 12, depending on the structural characteristics of tub 4, and

$T$ = time interval from the start of the count to the priming of circulation pump 12 as automatically measured by electronic control unit 17.

In particular, the primed and dry-running conditions of circulation pump 12 are registered by electronic control unit 17 by sensing characteristic electric data of the pump indicative of its functional state, for instance by sensing the instantaneous phase shift between the voltage and the electric current absorbed by the pump under the conditions of full-load operation or idling (corresponding respectively to the primed and dry-running conditions of the pump), the sensing step being preferably performed by per se known electronic components (not shown) associated to or incorporated in electronic control unit 17.

In this case, the magnitudes of these phase shifts ($\cos \phi$) characterizing the different functional states of circulation pump 12 are at first experimentally determined, and then stored in electronic control unit 17, whereupon the control unit 17 responds to the respective values being attained to thereby determine the corresponding operative conditions (primed or dry-running) of the circulation pump, and to decide whether or not it is required to admit further amounts of water to the tub. In particular, on the basis of the known flow through water-charging solenoid valve 16, electronic control unit 17 may cause further amounts of water to be admitted to the tub, if so required, by repeatedly energizing the solenoid valve, in response to the lowering of the water level in the tub caused by the absorption of the water-detergent solution by the laundry and by the recirculation of this solution for spraying it onto the laundry.

Under these conditions, electronic control unit 17 acts to automatically calculate the duration of each additional energization of the solenoid valve 16 in accordance with the formula:

$$T_R = \frac{Q_R}{P} = \frac{T \cdot Q_R}{Q_i}$$

wherein

$Q_R$ = the amount of water admitted to the tub during each additional energization of the solenoid valve,

$T_R$ = duration of each energization of the solenoid valve 16, and

$P$ = flow rate through solenoid valve 16

Each energization of solenoid valve 16 takes place in response to circulation pump 12 running dry.

In this manner, when circulation pump 12 always remains in the primed condition (this condition being normally established in a laundry washer of the recirculation type about four minutes after the first charge of water has been admitted to the tub), the water charging operation is terminated, and the electronic control unit 17 initiates the execution of the selected laundering program. By having accurately measured the total amount of water admitted to the tub 4 of the machine in the manner described above, the electronic control unit 17 is also capable of automatically determining the amount of laundry placed in the drum, since the water absorption capacities of different types of fabric have previously been stored in the memory of the electronic control unit after having been determined experimentally. On the base of the thus determined informations, the electronic control unit automatically controls the machine to execute the selected laundering program in accordance with the characteristics and the amount of the fabrics of the laundry to be laundered by suitably modifying the various parameters of the program (duration of the various laundering and rinsing phases, amount of liquid detergents to be supplied to the tub etc.) to thereby optimize the consumption of water, detergents and electric energy used for laundering the respective fabrics.

Fig. 2 shows another possible embodiment of the present measuring apparatus substantially composed of the same mechanical and electrical components as described above, with the addition of at least one anti-boil pressure switch 18 of conventional type connected to recirculation conduit 9 and the outlet of circulation pump 12, and acting to control the energization and deenergization of heater element 11 so as to keep it in the energized state in the presence of the minimum water charging level in the tub 4 while the laundering liquid is being recirculated and the heater element is completely covered by the liquid, and to deenergize it when the water level has dropped below the minimum level, resulting in circulation pump 12 running dry and heater element 11 being at least partially exposed, so that there would be the danger of the laundry washer being damaged or scorched.

As shown in fig. 3, anti-boil pressure switch 18 has a movable electric contact 19 connected to the electric circuit of the machine and adapted to be switched onto one or the other of two fixed contacts 20 and 21 of the pressure switch when tub 4 has been filled with the laundering liquid up to the minimum level, or when the liquid level is below the minimum level, respectively, fixed contact 20 being adapted to be connected in series with heater element 11 by the closure of an electric contact 22 operable by the electronic control unit 17, and through a protection thermostat 23 of a conventional type.

On the other hand, fixed contact 20 is connected to electronic control unit 17 through a series of conventional electronic components generally indicated at 24 and acting to inform the electronic control unit whether or not movable contact 19 is closed on fixed contact 20 when circulation pump 12 is in its primed or dry-running state, respectively.

As in the preceding embodiment, in the present case the measuring procedure is also carried out by sensing operational data of circulation pump 12, more specifically, by detecting the outlet pressure of the pump by means of the anti-boil pressure switch 18, the respective displacements of the movable contact of the pressure switch being relayed to the electronic control unit 17 which acts to measure or count the various intervals between the primed condition and the dry-running state of the pump and to thereby automatically calculate the actual amount of water admitted to the tub by the same criteria and for the same purposes as specified above.

**Claims**

1. Apparatus for measuring the water charge in a laundry washer, particularly a laundry washer of the type in which the laundering liquid is recirculated and sprayed onto the laundry and comprising a tub, a rotatable drum for containing the laundry, a recirculation conduit provided at least with a circulation pump and connected to upper and lower portions of said tub, a discharge conduit provided with a discharge pump, at least one water charging solenoid valve, an electric heater element for heating the water-detergent solution contained in said tub, and means for controlling the execution of the laundering programs of the machine,
characterized by comprising at least one further conduit (10) connected to said recirculation conduit (9) and said tub (4) by way of said recirculation pump (12) at a level corresponding to the minimum water charge level in said tub and adapted to prime said circulation pump (12),
and in that said control means (17) acts to initially count or measure the time interval between the start of the admission of water into said tub (4) and the first priming of said circulation pump (12) by detecting the magnitude of electric and/or hydraulic characteristics of said circulation pump (12) indicative of the operative state thereof, to thereby determine the flow through said solenoid valve (16), and to subsequently determine, on the basis of the thus detected flow through said solenoid valve (16), the total amount of water admitted to said tub (4) in accordance with the type and amount of laundry placed in said drum (14), by measuring all of the primed and dry-running phases of said circulation pump (12), said control means (17) being further designed to optimize the parameters of any selected laundering program in accordance with the thus determined total amount of water.

2. Measuring apparatus according to claim 1, characterized in that the electric characteristics detected by said control means (17) are the voltage and the electric current absorbed by said circulation pump (12), and in particular the variations of these electric characteristics when said circulation pump (12) operates under primed and dry-running conditions, respectively.

3. Measuring apparatus according to claim 1, characterized in that the hydraulic characteristic detected by said control means (17) is the outlet pressure of said circulation pump (12) in the primed and the dry-running state, respectively, with the aid of at least one conventional anti-boil pressure switch (18) permitting said heater element (11) to be energized only when the liquid in said tub (4) is at least at said minimum level corresponding to the circulation pump priming level at which said heater element (11) is completely covered by the liquid.

**Patentansprüche**

1. Vorrichtung zum Messen der Wassermenge in einer Waschmaschine, insbesondere einer solchen Waschmaschine, in der die Waschflüssigkeit rezirkuliert und auf die Wäsche gesprüht wird und die einen Bottich, eine drehbare Trommel zur Aufnahme der Wäsche, eine Rezirkulationsleitung, die mit wenigstens einer Umwälzpumpe versehen ist und mit oberen und unteren Abschnitten des Bottichs verbunden ist, eine mit einer Auslaßpumpe versehene Auslaßleitung, wenigstens ein Wasserzulauf-Elektromagnetventil, ein elektrisches Heizelement zum Erwärmen der im Bottich enthaltenen Wasser-Waschmittel-Lösung und Einrichtungen zum Steuern der Ausführung der Waschprogramme der Maschine aufweist, **dadurch gekennzeichnet**, daß sie wenigstens eine weitere Leitung (10) enthält, die mit der Rezirkulationsleitung (9) und dem Bottich (4) mittels der Umwälzpumpe (12) in einer Höhe verbunden ist, die dem minimalen Wasserpegel im Bottich entspricht und dafür bestimmt ist, die Umwälzpumpe (12) zum Ansaugen zu bringen, und daß die Steuereinrichtung (17) zu Anfang das Zeitintervall zwischen dem Beginn des Wasserzulaufs in den Bottich (4) und den ersten Ansaugvorgang der Umwälzpumpe (12) zählt oder mißt, indem die Amplitude der elektrischen und/oder hydraulischen Eigenschaften der Umwälzpumpe (12) ermitelt werden, die für den Betriebszustand derselben kennzeichnend sind, um dadurch die Strömung durch das Elektromagnetventil (16) zu bestimmen, und um anschließend auf der Grundlage der so ermittelten Strömung durch das Elektromagnetventil (16) die Gesamtmenge des in den Bottich (4) eingelassenen Wassers in Übereinstimmung mit der Art und der Menge der in der Trommel (14) befindlichen Wäsche zu bestimmen, indem alle Ansaug- und Trockenlaufphasen der Umwälzpumpe (12) gemessen werden, wobei die Steuereinrichtung (17) weiterhin dazu eingerichtet ist, die Parameter jedes ausgewählten Waschprogramms in Übereinstimmung mit der so bestimmten Gesamtwassermenge zu optimieren.

2. Meßvorrichtung nach Anspruch 1**, dadurch gekennzeichnet**, daß die elektrischen Eigenschaften, die durch die Steuereinrichtung (17) ermittelt werden, die Spannung und der elektrische Strom sind, die von der Umwälzpumpe (12) aufgenommen werden, und insbesondere die Schwankungen dieser elektrischen Eigenschaften, wenn die Umwälzpumpe (12) unter Ansaug- bzw. Trockenlaufbedingungen arbeitet.

3. Meßvorrichtung nach Anspruch 1, **dadurch gekennzeichnet**, daß die hydraulische Eigenschaft, die von der Steuereinrichtung (17) ermittelt wird, der Auslaßdruck der Umwälzpumpe (12) im Ansaug- bzw. im Trockenlaufzustand ist, wobei mittels wenigstens eines üblichen Kochverhinderungsdruckschalters (18) das Heizelement (11) nur dann mit Energie versorgbar ist, wenn die Flüssigkeit im Bottich (4) sich wenigstens bis zum Minimalpegel erstreckt, der dem Umwälzpumpenansaugpegel entspricht, bei dem das Heizelement (11) vollständig von der Flüssigkeit überdeckt ist.

## Revendications

1. Dispositif pour mesurer la charge d'eau dans un lavelinge, en particulier dans un lave-linge du type dans lequel le liquide de lavage est recyclé et est pulvérisé sur le linge, et comprenant une cuve, un tambour rotatif pour contenir le linge, un conduit de recyclage équipé d'au moins une pompe de circulation et raccordé aux portions supérieure et inférieure de la cuve, un conduit de vidange équipé d'une pompe de vidange, au moins une électrovanne d'admission d'eau, un élément chauffant électrique pour chauffer la solution d'eau et de détergent contenue dans la cuve, et des moyens pour commander l'exécution des programmes de lavage de la machine, caractérisé en ce qu'il comprend au moins un autre conduit (10) raccordé au conduit de recyclage (9) et à la cuve (4) au moyen de la pompe de circulation (12) à un niveau correspondant au niveau minimal d'eau dans la cuve et propre à amorcer ladite pompe de circulation (12), et en ce que les moyens de commande (17) agissent pour compter ou mesurer initialement l'intervalle de temps entre le début de l'admission d'eau dans la cuve (4) et le premier amorçage de la pompe de circulation (12) en détectant la valeur des caractéristiques électriques et/ou hydrauliques de la pompe de circulation (12) indicatives de son état de fonctionnement, afin de déterminer ainsi le débit à travers l'électrovanne (16) et déterminer ensuite, sur la base du débit ainsi détecté à travers l'électrovanne (16), la quantité totale d'eau admise dans la cuve (4) en fonction du type et de la quantité de linge placé dans le tambour (14), en mesurant toutes les phases de fonctionnement, en charge et à vide, de ladite pompe de circulation (12), ces moyens de commande (17) étant en outre conçus pour optimiser les paramètres de tout programme de lavage sélectionné en fonction de la quantité totale d'eau ainsi déterminée.

2. Dispositif de mesure selon la revendication 1, caractérisé en ce que les caractéristiques électriques détectées par les moyens de commande (17) sont la tension et le courant électrique absorbés par la pompe de circulation (12) et, en particulier, les variations de ces caractéristiques électriques lorsque la pompe de circulation (12) fonctionne respectivement dans des conditions de fonctionnement en charge et à vide.

3. Dispositif de mesure selon la revendication 1, caractérisé en ce que la caractéristique hydraulique détectée par les moyens de commande (17) est la pression de sortie de la pompe de circulation (12) respectivement dans l'état de fonctionnement en charge et à vide, à l'aide d'au moins un manostat anti-ébullition conventionnel (18) permettant de mettre en circuit l'élément chauffant (11) seulement lorsque le liquide dans la cuve (4) est au moins au niveau minimal correspondant au niveau d'amorçage de la pompe de circulation, niveau pour lequel l'élément chauffant (11) est complètement recouvert par le liquide.

FIG 1

FIG 2

FIG 3